# EUROPEAN PATENT APPLICATION

(11) **EP 4 607 493 A1**
(43) Date of publication of application: **27.08.2025**
(21) Application number: 25155504.1
(22) Date of filing: 03.02.2025
(51) Int. Cl.: G08G 5/51, G01C 21/00

(54) **SYSTEMS AND METHODS FOR PROCESSING AIRPORT MAPPING DATABASE DATA**

(30) Priority: 26.02.2024 US 202418586888
(71) Applicant: Honeywell International Inc., Charlotte, NC 28202 (US)
(72) Inventor: SYKAM, Umasurya, Charlotte, 28202 (US); WRIGHT, David, Charlotte, 28202 (US); MCGARVEY, Sharon L., Charlotte, 28202 (US)
(74) Representative: Lucas, Peter Lawrence

(57) **Abstract**

Systems and methods for processing Airport Mapping Database (AMDB) data are provided. The systems include a guidance element database accessible by an aircraft surface movement guidance system, and a controller functionally coupled to the guidance element database and configured to, by one or more processors: receive AMDB data from an AMDB, wherein the AMDB data includes aerodrome surface elements of an airport including guidance lines associated with regions of the airport, preprocess the AMDB data to fuse at least some of the aerodrome surface elements and thereby produce fused AMDB data indicative of fused aerodrome surface elements, process the AMDB data and the fused AMDB data to determine guidance elements including one or more single paths and/or zones for at least some of the regions of the airport, and store the guidance elements in the guidance element database.

## Description

### TECHNICAL FIELD

The present invention generally relates to airport navigation, and more particularly relates to systems and methods for processing Airport Mapping Database (AMDB) data for use by aircraft surface movement guidance systems.

### BACKGROUND

An Airport Mapping Database (AMDB) is a digital database that provides detailed information about the layout and infrastructure of various airports. It serves as a comprehensive and standardized source of data for use by various aviation professionals including pilots, air traffic controllers, and airport operators. An AMDB may include geospatial information of the physical layout of the airport (e.g., runways, taxiways, aprons, gates, terminals, etc.), runway and taxiway detail information (e.g., dimensions, surface type, and any relevant markings or lighting), information about airport facilities (e.g., terminals, gates, hangars, fueling stations, etc.), information about obstacles in and around the airport, details about navigation aids (e.g., instrument landing systems (ILS), VOR (VHF Omnidirectional Range) stations, etc.).

Some AMDBs are configured to be integrated with cockpit displays, providing pilots with electronic navigation charts and airport maps that can be displayed on electronic flight bags (EFBs) or cockpit displays. Continuing improvements to these and other systems may necessitate improvements to the processing of AMDB data and/or how the AMDB data is used.

Hence, there is a need for systems and methods that are capable of processing AMDB data for use by advanced aircraft surface movement guidance systems. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a method is provided that includes by a controller having one or more processors: receiving AMDB data from an airport mapping database (AMDB), wherein the AMDB data includes aerodrome surface elements of an airport including guidance lines associated with regions of the airport, preprocessing the AMDB data to fuse at least some of the aerodrome surface elements and thereby produce fused AMDB data indicative of fused aerodrome surface elements, processing the AMDB data and the fused AMDB data to determine guidance elements including one or more single paths and/or zones for at least some of the regions of the airport, and storing the guidance elements in a guidance element database.

In various embodiments, a system is provided that includes a guidance element database accessible by an aircraft surface movement guidance system, and a controller functionally coupled to the guidance element database and configured to, by one or more processors: receive AMDB data from an airport mapping database (AMDB), wherein the AMDB data includes aerodrome surface elements of an airport including guidance lines associated with regions of the airport, preprocess the AMDB data to fuse at least some of the aerodrome surface elements and thereby produce fused AMDB data indicative of fused aerodrome surface elements, process the AMDB data and the fused AMDB data to determine guidance elements including one or more single paths and/or zones for at least some of the regions of the airport, and store the guidance elements in the guidance element database.

Furthermore, other desirable features and characteristics of the method and system will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 schematically represents an AMDB data processing system in accordance with an embodiment;
FIG. 2 is a flowchart illustrating an exemplary method for processing and/or preprocessing AMDB data in accordance with an embodiment;
FIGS. 3A and 3B schematically represent a portion of an airport navigation network that includes a taxiway, a runway, and a guidance line. FIG. 3A illustrates an undershoot of the guidance line relative to a shared boundary between the taxiway and the runway. FIG. 3B illustrates the guidance line as extended to correct the undershoot and contact the shared boundary in accordance with an embodiment;
FIGS. 4A and 4B schematically represents a portion of an airport navigation network that includes a non-intersection taxiway, an apron, and various guidance lines. FIG. 4A illustrates primary and secondary guidance lines that extend from the taxiway and into the apron. FIG. 4B illustrates the taxiway with the aforementioned primary and secondary guidance lines removed in accordance with an embodiment;
FIG. 5 schematically represents a portion of an airport navigation network that includes various taxiways, guidance lines, and single paths derived from the guidance lines in accordance with an embodiment;
FIG. 6 schematically represents a portion of an airport navigation network that includes a taxiway, a guidance line that does not extend entirely across the taxiway, and a single path derived from the guidance line in accordance with an embodiment;
FIG. 7 schematically represents a portion of an airport navigation network that includes a taxiway, guidance lines that diverge within the taxiway, and a single path derived from the guidance lines in accordance with an embodiment;
FIG. 8 schematically represents a portion of an airport navigation network that includes a runway, an intersection taxiway, guidance lines extending across the taxiway towards the runway, and a zone derived from the guidance lines in accordance with an embodiment; and
FIG. 9 schematically represents a portion of an airport navigation network that includes various taxiways, guidance lines, a runway, and single paths and zones derived from the guidance lines in accordance with an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

Systems and methods disclosed herein provide for processing Airport Mapping Database (AMDB) data for use by aircraft surface movement guidance systems. AMDBs are Geographic Information System (GIS) databases of airports. In some examples, the AMDBs include aerodrome surface elements in accordance with aeronautical DO-272 and DO-291 standards or subsequent versions of those standards. The AMDB data may be digitalized to produce an airport map or an airport navigation network. The airport navigation network generally includes a plurality of polygons, each defining a contained surface boundary associated with all or a portion of a region of an airport, such as a taxiway. The airport navigation network includes a plurality of digitalized vector lines, referred to as aircraft guidance lines or simply guidance lines, each of which is positioned within a corresponding polygon and connects two respective points, also called nodes, of two distinct sides or boundaries of the polygon.

While digitizing the AMDB data, topological errors may occur resulting in, for example, guidance lines that overshoot or undershoot sides of the polygons, and/or that define knots or loops adjacent the sides of the polygons. Briefly, the systems and methods disclosed herein are configured to address issues such as these by processing the AMDB data in a manner that provides for the advanced geographic spatial requirements of aircraft surface movement guidance systems.

In some examples, the systems and methods disclosed herein may process AMDB data to derive therefrom guidance elements that may be subsequently used for various purposes such as generation and display of visual representations of taxi paths for aircraft. In some examples, the system and methods disclosed herein may fuse certain aerodrome surface elements retrieved from an AMDB such as taxiway guidance lines, runway exit lines, taxi lanes, runways, etc. and then derive single paths for some or all of the non-intersection taxi lanes with entry and exits. In some examples, the systems and methods disclosed herein may process certain aerodrome surface elements retrieved from an AMDB such as taxiway guidance lines, runway exit lines, taxi lanes, runways, etc. and then derive zones for some or all of the intersection taxi lanes.

It should be noted that the term aircraft, as utilized herein, may include any manned or unmanned object capable of flight. Examples of aircraft may include, but are not limited to, fixed-wing aerial vehicles (e.g., propeller-powered or jet powered), rotary-wing aerial vehicles (e.g., helicopters), manned aircraft, unmanned aircraft (e.g., unmanned aerial vehicles, or UAVs), delivery drones, etc. For convenience, the systems and methods will be described in reference to multiple manned or human controlled aircraft; however, as noted the systems and methods are not limited to such application.

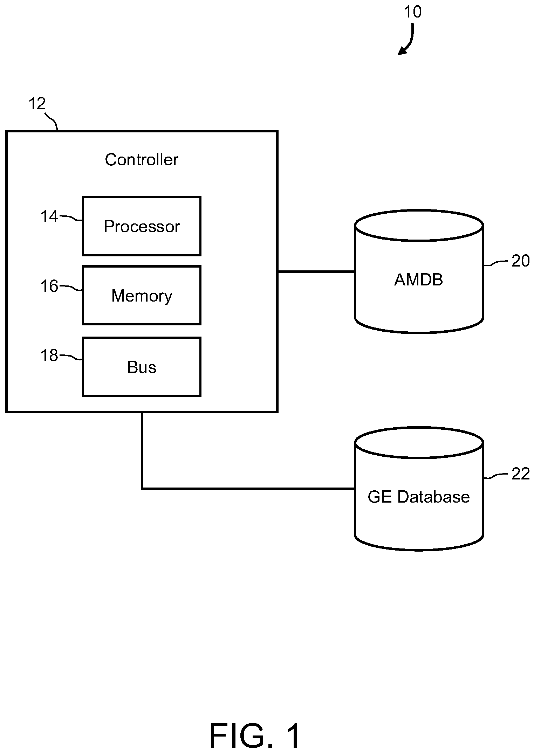

Referring now to FIG. 1, an AMDB data processing system 10 is illustrated in accordance with an exemplary and nonlimiting implementation of the present disclosure. The AMDB data processing system 10 includes a controller 12 in communication with an AMDB 20 of an airport. The term "controller," as appearing herein, broadly encompasses those components utilized to carry-out or otherwise support the processing functionalities of the AMDB data processing system 10. Accordingly, the controller 12 may encompass or may be associated with any number of individual processors, flight control computers, navigational equipment pieces, computer-readable memories, power supplies, storage devices, interface cards, and other standardized components.

In various embodiments, the controller 12 may include at least one processor 14, a communication bus 18, and a computer readable storage device or media 16 (memory). The processor 14 performs the computation and control functions of the respective controller 12. The processor 14 can be any custom made or commercially available processor, a central processing unit (CPU), a graphics processing unit (GPU), an auxiliary processor among several processors associated with the controller 12, a semiconductor-based microprocessor (in the form of a microchip or chip set), any combination thereof, or generally any device for executing instructions. The computer readable storage device or media 16 may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 12. The bus 18 serves to transmit programs, data, status and other information or signals between the various components of the AMDB data processing system 10. The bus 18 can be any suitable physical or logical means of connecting computer systems and components. This includes, but is not limited to, direct hard-wired connections, fiber optics, infrared, and wireless bus technologies.

The instructions may include one or more separate programs, each of which comprises an ordered listing of executable instructions for implementing logical functions. The instructions, when executed by the processor 14, receive and process signals, perform logic, calculations, methods and/or algorithms, and generate data based on the logic, calculations, methods, and/or algorithms. Although only one controller 12 is shown in FIG. 1, embodiments of the AMDB data processing system 10 can include any number of controllers 12 that communicate over any suitable communication medium or a combination of communication mediums and that cooperate to process the sensor signals, perform logic, calculations, methods, and/or algorithms, and generate data. In various embodiments, the controller 12 includes or cooperates with at least one firmware and software program (generally, computer-readable instructions that embody an algorithm) for carrying-out the various process tasks, calculations, and control/display functions described herein. During operation, the controller 12 may be programmed with and execute at least one firmware or software program that embodies one or more algorithms, to thereby perform the various process steps, tasks, calculations, and control/display functions described herein.

The AMDB data processing system 10 may include one or more local or remote databases 22 employed to receive and store data, which may be updated on a periodic or iterative basis to ensure data timeliness. In various embodiments, the database 22 may be onboard the aircraft. In various embodiments, the database 22 may be available online and accessible remotely by a suitable wireless communication system. The database 22 may be configured to receive data from the controller 12 for storage therein, and may be accessible by an aircraft surface movement guidance system for retrieval of the stored data.

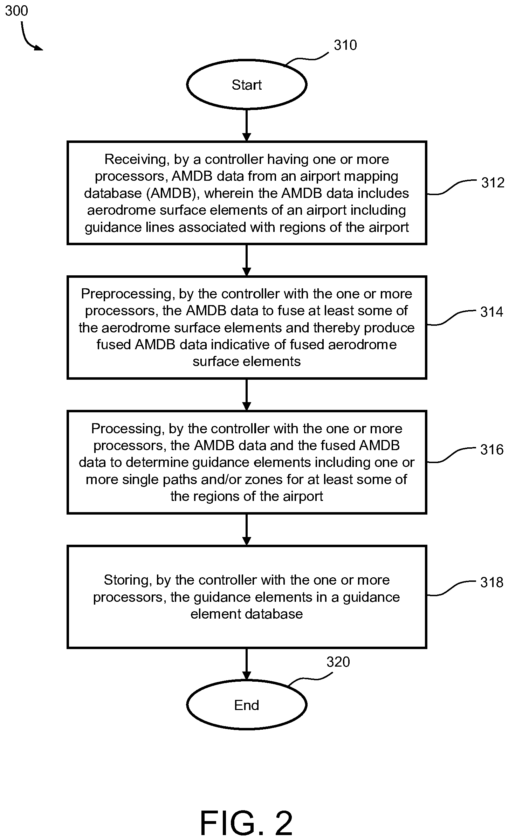

The systems disclosed herein, including the AMDB data processing system 10, provide for methods of preprocessing and/or processing AMDB data for use by aircraft surface movement guidance systems. For example, FIG. 2 is a flowchart illustrating an exemplary method 300 for preprocessing and processing AMDB data. The method 300 may start at 310.

At 312, the method 300 may include receiving, by a controller (e.g., the controller 12) having one or more processors, AMDB data from an airport mapping database (AMDB). The AMDB data includes aerodrome surface elements of an airport including guidance lines associated with regions of the airport.

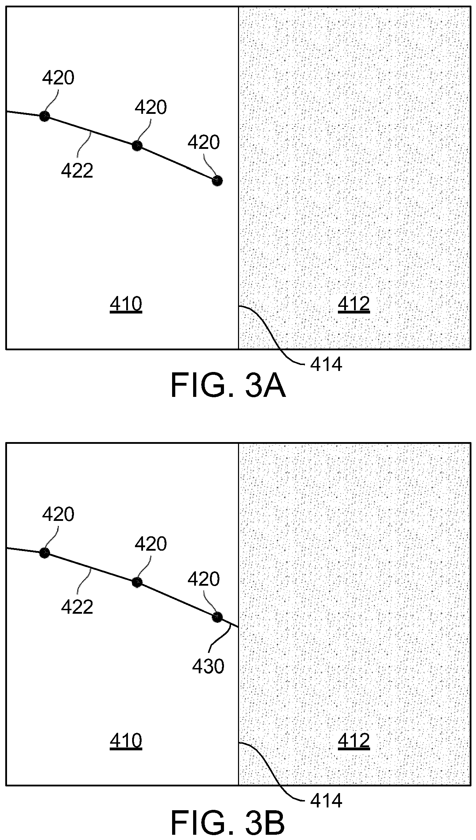

At 314, the method 300 may include preprocessing, by the controller with the one or more processors, the AMDB data to fuse at least some of the aerodrome surface elements and thereby produce fused AMDB data indicative of fused aerodrome surface elements. Various processes may be performed in the preprocessing step 314. In some examples, the preprocessing step 314 includes modifying one or more of the guidance lines to correct overshoots and/or undershoots of the guidance lines. As used herein, an overshoot refers to a portion of a guidance line that extends past an adjacent boundary of the corresponding polygon in which the guidance line is disposed, and an undershoot refers to a gap defined between an end of a guidance line and an adjacent boundary of the corresponding polygon in which the guidance line is disposed when the guidance line ends short of the boundary. For example, FIGS. 3A and 3B illustrate modification of a guidance line 422 digitalized from AMDB data. In FIG. 3A, the guidance line 422 extends across a taxiway 410 and approaches a side 414 of the taxiway 410 that defines a shared boundary between the taxiway 410 and a runway 412. In FIG. 3A, the guidance line 422 undershoots the side 414. In FIG. 3B, the undershoot has been detected and the guidance line 422 has been extended by a portion 430 to contact the side 414. In some examples, the portion 430 may match or continue a curvature of an adjacent portion of the guidance line 422.

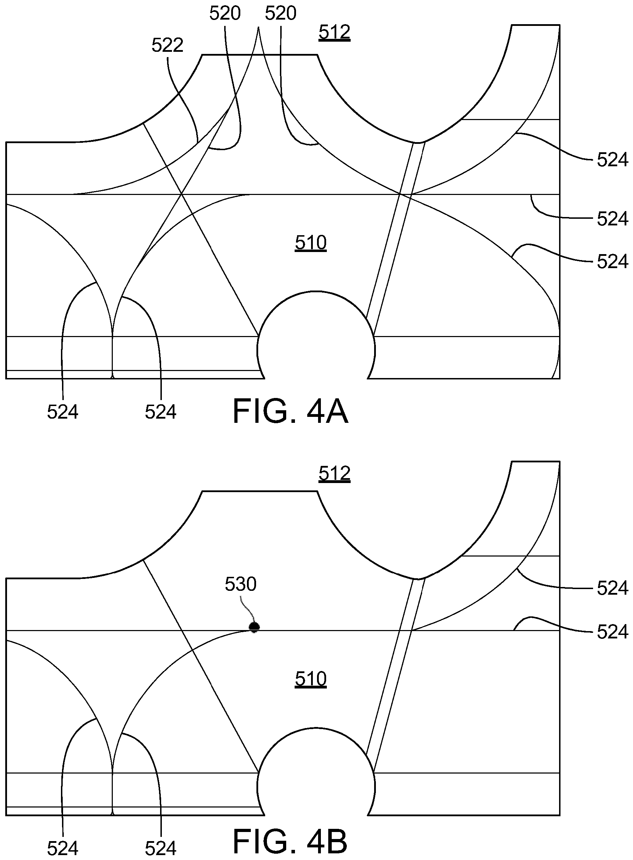

In some examples, the preprocessing step 314 includes filtering the guidance lines to remove any of the guidance lines that extend onto aprons of the airport. For example, FIGS. 4A and 4B present a taxiway 510 that is adjacent to an apron 512. Various guidelines are located within the taxiway 510 upon digitalization of the AMDB data. In FIG. 4A, primary guidelines 520 and a secondary guideline 522 extend into the apron 512. In FIG. 4B, the primary guidelines 520 and the secondary guideline 522 are removed from the taxiway 510.

In some examples, the preprocessing step 314 includes determining the direction of travel assigned to a guideline (e.g., one-way traffic, two-way traffic).

In some examples, the preprocessing step 314 includes segmenting one or more of the guidance lines at intersecting points therebetween, that is, locations wherein two or more guidance lines intersect within a common polygon. For example, FIG. 4B illustrates an exemplary intersection point 530.

In some examples, the preprocessing step 314 includes combining any of the guidance lines that are aligned but segmented due to hold lines of the airport, that is, markings that indicate where an aircraft must stop when, for example, approaching a runway.

In some examples, the preprocessing step 314 includes filtering the guidance lines to remove any of the guidance lines that, within a common polygon, diverge from each other near a shared side of the polygon. In various examples, the phrase "near a shared side" may be based on a total length of the guidance lines, such as within 10 percent of the total guidance line from the shared side, such as within 5 percent, such as within 3 percent, such as within 2 percent, such as within 1 percent.

At 316, the method 300 may include processing, by the controller with the one or more processors, the fused AMDB data to determine guidance elements that include one or more single paths and/or zones for at least some of the regions of the airport. Various processes may be performed in the processing step 316. In some examples, the processing step 316 may include linking one or more of the guidance lines with adjacent boundaries of the regions in which the guidance lines are disposed.

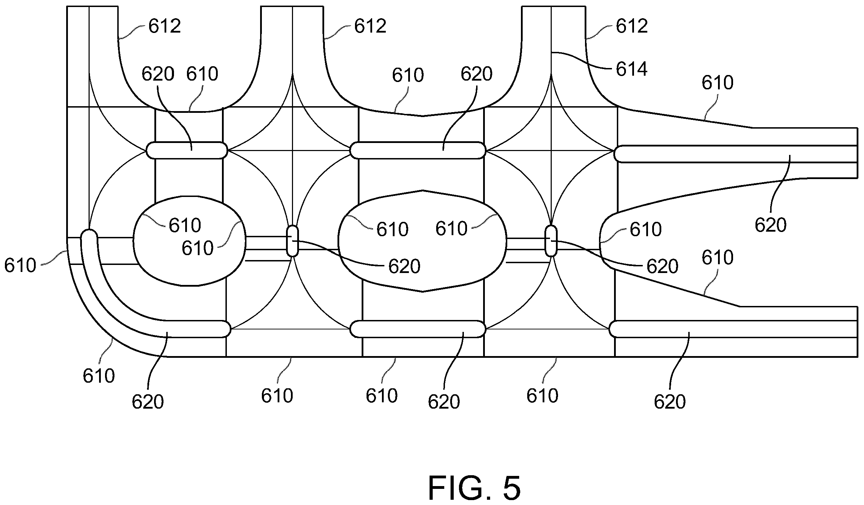

In some examples, the processing step 316 may include combining the guidance lines that are aligned and overlap within a common polygon such that there is only one path across the corresponding region of the airport. For example, FIG. 5 presents a portion of an airport that includes non-intersection taxiways 610, intersection taxiways 612, and guidance lines 614 of the fused AMDB data. The overlapping and aligned guidance lines 614 within the non-intersection taxiways 610 are combined such that each of the taxiways 610 include only a one path extending across the taxiways 610. Single paths 620 are formed in the taxiways 610 along these paths that extend across the taxiways 610 between the boundaries of the region.

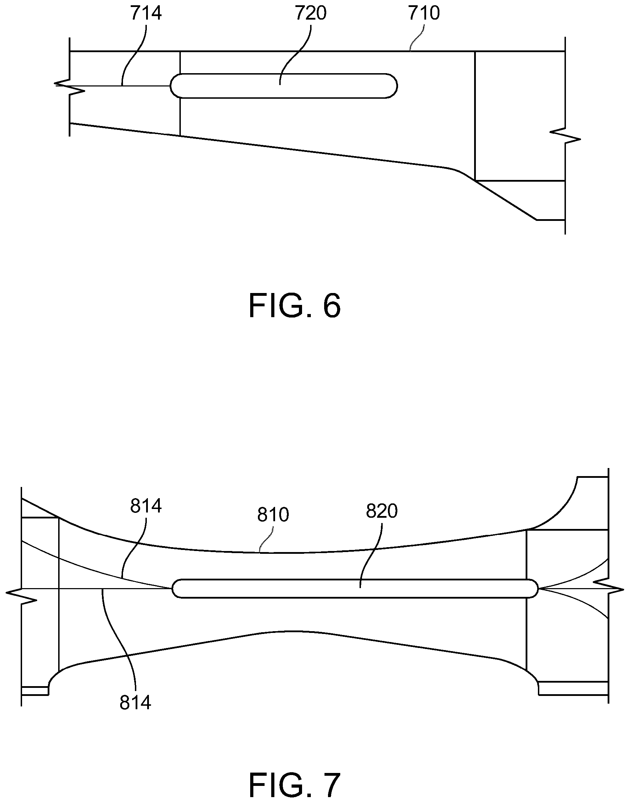

In some examples, the guidance lines may not extend entirely across the regions of the airport or the guidance lines may not be aligned and overlapping across an entirety of the taxiways. In such examples, the processing may include linking a short, guidance line with a boundary of the region in which the short guidance line is disposed. For example, FIG. 6 presents a taxiway 710 having a guidance line 714 that extends across only a portion of the taxiway 710. A single path 720 is formed extending between a boundary of the taxiway 710 and an extent of the guidance line 714.

As another example, FIG. 7 presents a taxiway 810 with guidance lines 814 that are aligned for a first portion of the taxiway 810 and then diverge into two separate paths for a second portion of the taxiway 810. A single path 820 is formed between a boundary of the taxiway 810 and a point at which the guidance lines 814 diverge, which may be an intersecting point.

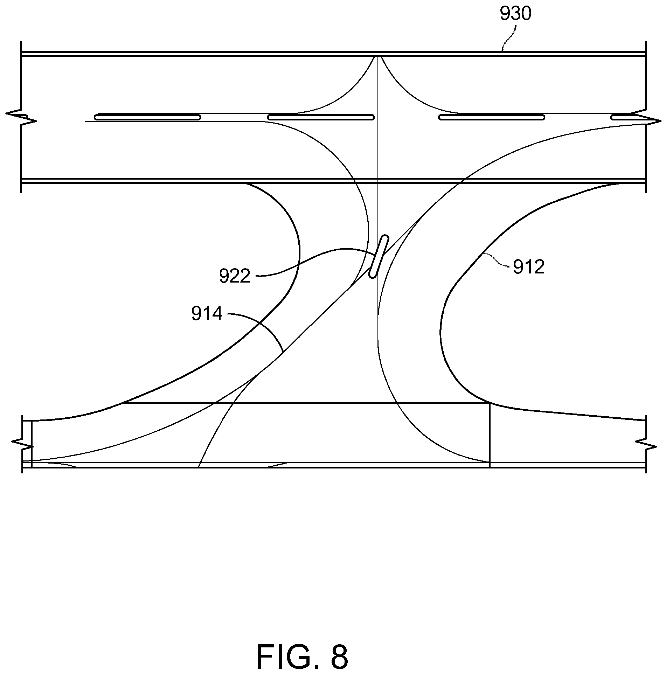

Single paths may not be formed in the intersection taxiways due to the multiple paths (i.e., guidelines) therein. However, in some examples, the processing step 316 may include determining the zones for intersection taxiways having non-aligned guidance lines. In some examples, the zones are defined as common points between the non-aligned guidance lines. For example, FIG. 8 presents an intersection taxiway 912 and a runway 930. The intersection taxiway 912 includes multiple guidance lines 914 extending across the intersection taxiway 912 to and from the runway 930. A zone 922 is formed adjacent to common points of the guidance lines 914.

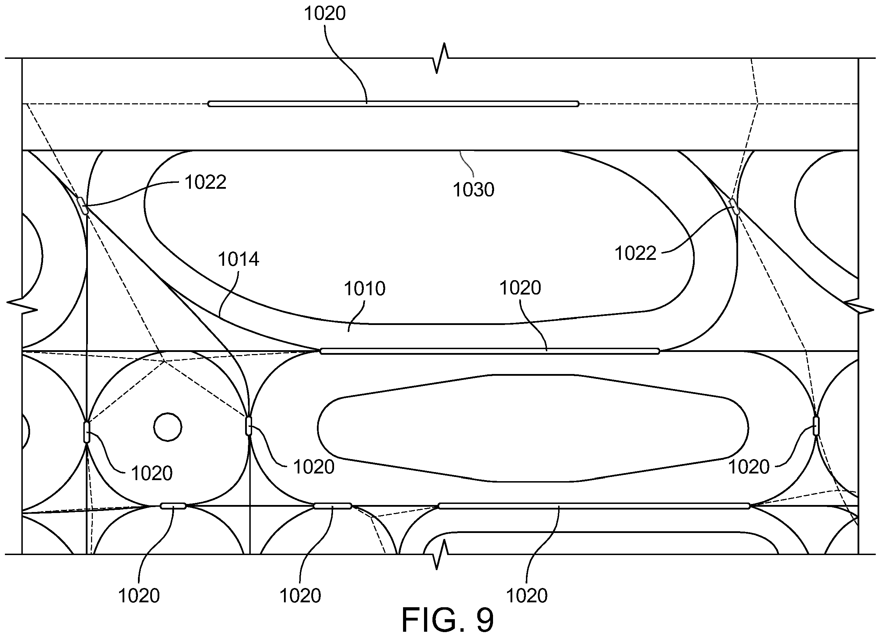

At 318, the method 300 may include storing, by the controller with the one or more processors, guidance element data indicative of the determined single paths and/or zones in a guidance element database (e.g., the GE database 22). For example, FIG. 9 presents a portion of an airport that includes various taxiways 1010, a runway 1030, and a plurality of guidance lines 1014. In addition, FIG. 9 illustrates various single paths 1020 and zones 1022 formed by the method 300. The single paths 1020 and the zones 1022 may be stored in a guidance element database for use by other systems, such as but not limited to certain aircraft surface movement guidance systems.

In some examples, the method 300 may include accessing the GE database and using the guidance element data by an aircraft surface movement guidance system to provide routes for aircraft taxiing at the airport. For example, an aircraft may be assigned by an air traffic controller to a specific taxi path as defined by a sequence of taxi edges that indicate a route for the aircraft to travel, for example, while taxiing between a parking stand and a runway. As used herein, a taxi edge refers to a taxiway, typically identified by alphanumerical identifiers (e.g., A, BB, C1, C2, etc.) or a section of a taxiway on an airport diagram and markings and/or signs at the airport.

The aircraft surface movement guidance system may retrieve the single paths and/or zones corresponding to the taxi path from the GE database 22 and generate a visual representation of the taxi path on a display device in the aircraft using the relevant single paths and/or zones. In some examples, the aircraft surface movement guidance system generates connector lines to connect the single paths through intersections based on paths calculated between source and destination using edges and nodes of the airport navigation network. In some examples, the visual representation of the taxi path is aligned with and includes an entirety of each of the relevant single paths at their respective positions. In some examples, the visual representation of the taxi path passes through each of the relevant zones, but is not necessarily aligned with each of the zones and does not necessarily include an entirety of the zones. More specifically, the visual representation of the taxi path may be required to contact at least one point in each of the relevant zones. In some examples, the visual representation of the taxi path presents a smooth transition between each of the relevant single paths and/or zones along the taxi path.

The method 300 may end at 320.

The systems and methods disclosed herein provide various benefits over certain existing systems and methods. For example, the guidance elements may allow various systems, such as certain aircraft surface movement guidance systems to generate a visual representation of a taxi path for an aircraft in an accurate and aesthetically pleasing manner. In some examples, generation of the visual representation of the taxi path based on the guidance elements, rather than based on guidance lines digitalized from AMDB data, may avoid various topological errors.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method, comprising:
receiving, by a controller having one or more processors, AMDB data from an airport mapping database (AMDB), wherein the AMDB data includes aerodrome surface elements of an airport including guidance lines associated with regions of the airport;
preprocessing, by the controller with the one or more processors, the AMDB data to fuse at least some of the aerodrome surface elements and thereby produce fused AMDB data indicative of fused aerodrome surface elements;
processing, by the controller with the one or more processors, the AMDB data and the fused AMDB data to determine guidance elements including one or more single paths and/or zones for at least some of the regions of the airport; and
storing, by the controller with the one or more processors, the guidance elements in a guidance element database.

2. The method of claim 1, wherein preprocessing the AMDB data includes, by the controller with the one or more processors, modifying at least a first guidance line of the guidance lines disposed within a first region of the airport that includes an overshoot or an undershoot relative to an adjacent boundary of the first region by extending or shortening, respectively, the first guidance line to end at the adjacent boundary.

3. The method of claim 1, wherein preprocessing the AMDB data includes, by the controller with the one or more processors, removing at least a first guidance line of the guidance lines that extends onto an apron of the airport, determining a direction of travel of the guidance lines, or segmenting at least a first guidance line and a second guidance line of the guidance lines that contact each other at an intersecting point therebetween.

4. The method of claim 1, wherein preprocessing the AMDB data includes, by the controller with the one or more processors, fusing at least a first guidance line and a second guidance line of the guidance lines that are aligned but segmented due to a hold line of the airport.

5. The method of claim 1, wherein preprocessing the AMDB data includes, by the controller with the one or more processors, removing at least a first guidance line and a second guidance line of the guidance lines that diverge from each other near a boundary of a first region of the regions of the airport.

6. The method of claim 1, wherein processing the fused AMDB data to determine the guidance elements includes, by the controller with the one or more processors, linking at least a first guidance line of the guidance lines with a boundary of a first region of the regions of the airport in which the first guidance line is disposed.

7. The method of claim 1, wherein processing the fused AMDB data to determine the guidance elements includes, by the controller with the one or more processors, combining at least a first guidance line and a second guidance line of the guidance lines that are aligned within a non-intersection taxiway of the airport to define a first single path of the one or more single paths.

8. The method of claim 1, wherein processing the fused AMDB data to determine the guidance elements includes, by the controller with the one or more processors, determining a first zone of the one or more zones for a taxiway of the airport having two or more non-aligned guidance lines therein, wherein the first zone includes common points between the two or more non-aligned guidance lines.

9. A system, comprising:
a guidance element database accessible by an aircraft surface movement guidance
system; and
a controller functionally coupled to the guidance element database and configured to, by one or more processors:
receive AMDB data from an airport mapping database (AMDB), wherein the AMDB data includes aerodrome surface elements of an airport including guidance lines associated with regions of the airport;
preprocess the AMDB data to fuse at least some of the aerodrome surface elements and thereby produce fused AMDB data indicative of fused aerodrome surface elements;
process the AMDB data and the fused AMDB data to determine guidance elements including one or more single paths and/or zones for at least some of the regions of the airport; and
store the guidance elements in the guidance element database.

10. The system of claim 9, wherein the controller is configured to, with the one or more processors, preprocess the AMDB data, at least in part, by modifying at least a first guidance line of the guidance lines disposed within a first region of the airport that includes an overshoot or an undershoot relative to an adjacent boundary of the first region by extending or shortening, respectively, the first guidance line to end at the adjacent boundary.

11. The system of claim 9, wherein the controller is configured to, with the one or more processors, preprocess the AMDB data, at least in part, by removing at least a first guidance line of the guidance lines that extends onto an apron of the airport, by determining a direction of travel of the guidance lines, or by segmenting at least a first guidance line and a second guidance line of the guidance lines that contact each other at an intersecting point therebetween.

12. The system of claim 9, wherein the controller is configured to, with the one or more processors, preprocess the AMDB data, at least in part, by fusing at least a first guidance line and a second guidance line of the guidance lines that are aligned but segmented due to a hold line of the airport, or by removing at least a first guidance line and a second guidance line of the guidance lines that diverge from each other near a boundary of a first region of the regions of the airport.

13. The system of claim 9, wherein the controller is configured to, with the one or more processors, process the fused AMDB data to determine the guidance elements, at least in part, by linking at least a first guidance line of the guidance lines with a boundary of a first region of the regions of the airport in which the first guidance line is disposed.

14. The system of claim 9, wherein the controller is configured to, with the one or more processors, process the fused AMDB data to determine the guidance elements, at least in part, by combining at least a first guidance line and a second guidance line of the guidance lines that are aligned within a non-intersection taxiway of the airport to define a first single path of the one or more single paths.

15. The system of claim 9, wherein the controller is configured to, with the one or more processors, process the fused AMDB data to determine the guidance elements, at least in part, by determining a first zone of the one or more zones for a taxiway of the airport having two or more non-aligned guidance lines therein, wherein the first zone includes common points between the two or more non-aligned guidance lines.
